# EUROPEAN PATENT APPLICATION

(11) **EP 1 447 990 A2**
(43) Date of publication of application: **18.08.2004**
(21) Application number: 04250262.5
(22) Date of filing: 20.01.2004
(51) Int. Cl.: H04N 7/24

(54) **Active packet identifier table**

(30) Priority: 21.01.2003 US 348576
(71) Applicant: Nokia Corporation, 02150 Espoo (FI)
(72) Inventor: Bergstrand, Johan Tore, 59592 Mjolby (SE)
(74) Representative: Read, Matthew Charles

(57) **Abstract**

Methods and systems are disclosed for processing and identifying the contents of a partial transport stream. A transport stream is filtered to produce a partial transport stream containing transport stream packets that carry data for a selected program or service. An active packet identifier table (APT) is generated to identify the PIDs of transport stream packets that remain in the partial transport stream. The partial transport stream may then be processed by utilizing information in the APT and service information tables included in the original transport stream.

## Description

### BACKGROUND OF THE INVENTION

### FIELD OF THE INVENTION

The invention relates to broadband digital transmission and reception. More particularly, the invention relates to the addition of an active packet identifier table to describe packet identifier values present in a partial transport stream.

### DESCRIPTION OF RELATED ART

Digital broadband transmission networks are known. An example of such a network is that defined by the Advanced Television Systems Committee (ATSC). Another example of such a network enjoying popularity in Europe and elsewhere world-wide is Digital Video Broadcast (DVB) which, like ATSC, in addition to the delivery of television content, is also capable of delivering data. Both ATSC and DVB utilise a containerization technique in which content for transmission is placed into MPEG-2 packets that act as data containers. The data containers can be utilized to transport any suitably digitised data including, but not limited to High Definition TV, multiple channel standard definition TV (PAL / NTSC or SECAM) and, of course, broadband multimedia data and interactive services.

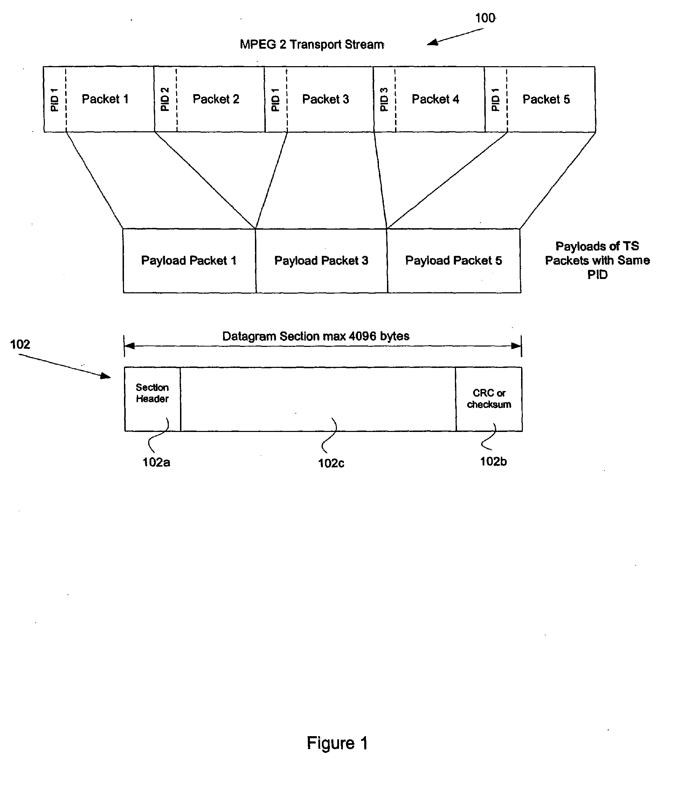

Figure 1 illustrates a structure of a conventional MPEG-2 packet transmission scheme. An MPEG-2 transport stream 100 includes several transport stream packets. Each transport stream packet is identified by a packet identifier value (PID). As is shown in Figure 1, several different transport stream packets may be identified by the same PID. PIDs are typically used to identify services and programs transmitted as part of a digital video broadcast compliant transport stream. Figure 1 shows that the payloads of transport stream packets with the same PID may be grouped together in a datagram section 102. Datagram section 102 includes a section header 102a and CRC or checksum bits 102b.

It is common to transmit several different programs and services multiplexed into a single transport stream. As a result, a transport stream may include several transport stream packets that are not needed for a particular program or service. A partial transport stream includes only those transport stream packets that are relevant to a particular selected program or service.

In one prior art application, a transport stream is filtered to produce a partial transport stream that is stored on a recordable medium. The partial transport stream contains transport stream packets containing a desired program or service. In order to identify the transport stream packets included in the partial transport stream, the recording device generates new service information tables. The new service information tables and partial transport stream are recorded on the recording medium.

The generation of new service information tables is not trivial and consumes the processing capabilities of a recording device during the recording process. Therefore, there exists a need in the art for systems and methods that reduce the processing requirements of a recording device during the recording of a partial transport stream.

### BRIEF SUMMARY OF THE INVENTION

One or more of the above-mentioned needs in the art are satisfied by the disclosed systems and methods that include an active packet identifier table (APT) that is used to describe PIDs that are present in a partial transport stream. The APT may be generated at the time that a transport stream is filtered to produce the partial transport stream. The partial transport stream may then be recorded.

In a first embodiment of the invention, a method of processing a transport stream containing transport stream packets identified by a set of packet identifier values and a service information table identifying all of the packet identifier values in the transport stream is provided. The method includes filtering the transport stream to form a partial transport stream containing transport stream packets identified by a subset of packet identifier values. The subset of packet identifier values contains fewer packet identifier values than the set of packet identifier values. Next, an active packet identifier value table identifying the subset of packet identifier values is generated. A second transport stream that includes the partial transport stream, the service information table and the active packet identifier value table is generated.

In another embodiment of the invention, a set-top box coupled to a transport stream containing transport stream packets identified by a set of packet identifier values and a service information table identifying all of the packet identifier values in the transport stream is provided. The set-top box includes a demultiplexer that filters the transport stream to form a partial transport stream containing transport stream packets identified by a subset of packet identifier values. An active packet identifier value table generation module is included to generate an active packet identifier value table that identifies the subset of packet identifier values. The set-top box also includes a recording module that records on a recording medium the partial transport stream, the service information table and the active packet identifier value table.

In yet another embodiment of the invention, a digital video system is provided. The digital video system includes a tuner, a set-top box and a network coupling the tuner to the set-top box. The tuner is coupled to a transport stream containing transport stream packets identified by a set of packet identifier values and a service information table identifying all of the packet identifier values in the transport stream. The tuner includes: (1) a demultiplexer that filters the transport stream to form a partial transport stream containing transport stream packets identified by a subset of packet identifier values and (2) an active packet identifier value table generation module that generates an active packet identifier value table that identifies the subset of packet identifier values. The set-top box includes a playback module that identifies the components of a program by comparing the service information table to the active packet identifier value table.

In other embodiments of the invention, computer-executable instructions for implementing the disclosed methods are stored on computer-readable media.

### BRIEF DESCRIPTION OF THE DRAWINGS

The present invention is illustrated by way of example and not limited in the accompanying figures in which like reference numerals indicate similar elements and in which:
Figure 1 illustrates a structure of a conventional MPEG-2 packet transmission scheme.
Figure 2 shows a digital video system in accordance with an embodiment of the invention;
Figure 3 shows a method of operating a digital video system in accordance with an embodiment of the invention;
Figure 4 illustrates service information tables and an active packet identifier table in accordance with an embodiment of the invention; and
Figure 5 shows a portion of a partial transport stream formatted in accordance with an embodiment of the invention.

### DETAILED DESCRIPTION OF THE INVENTION

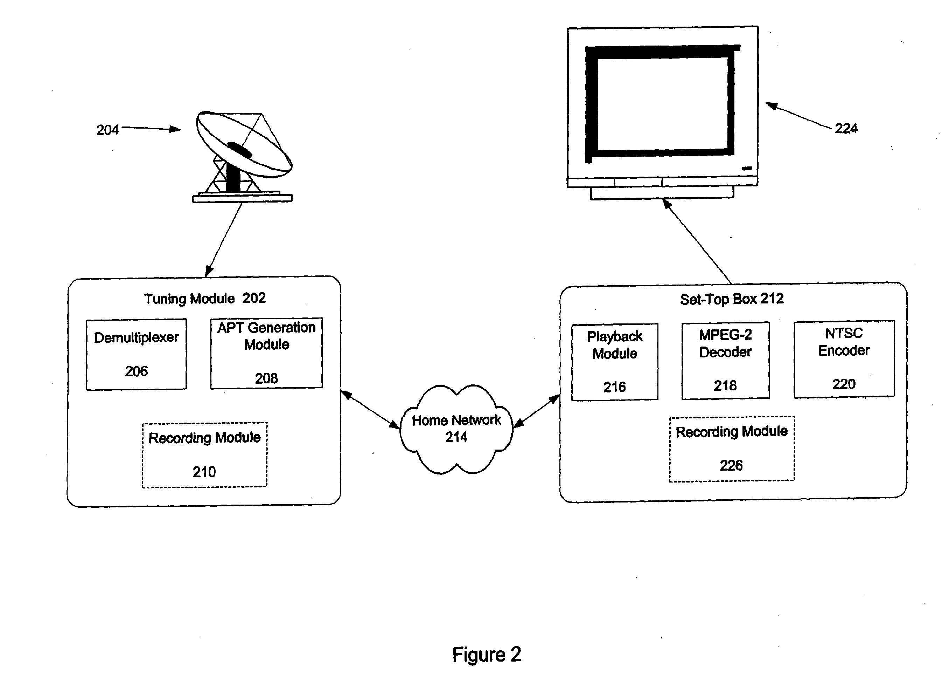

Figure 2 illustrates a digital video system in accordance with an embodiment of the invention. A tuning module 202 is coupled to a satellite dish 204 that receives a transport stream containing transport stream packets. In alternative embodiments of the invention other transmission mediums may be utilized. For example, tuning module 202 may be coupled to a terrestrial network. Tuning module 202 may include a demultiplexer 206, an APT generation module 208 and a recording module 210. Demultiplexer 206 may be used to filter the incoming transport stream to produce a partial transport stream that contains transport stream packets that carry a requested service or program.

APT generation module 208 may be used to insert an APT identifying the PIDs of transport stream packets that remain in the partial transport stream produced by demultiplexer 206. Tuning module 202 may also include a recording module 210. Recording module 210 may include a hard disk drive, random access memory module, digital tape drive, DVD drive, or any other mechanism for recording a digital program or service.

In the embodiment shown in Figure 2, tuning module 202 is coupled to a set-top box 212 via a home network 214. One of the advantages of the system shown in Figure 2 is that filtering an incoming transport stream with tuning module 202 before transmitting the partial transport stream to set-top box 212 allows the system to utilize a network having a relatively narrow bandwidth. That is, the bandwidth of home network 214 may be less than the bandwidth of the transmission medium connecting satellite dish 204 to tuning module 202.

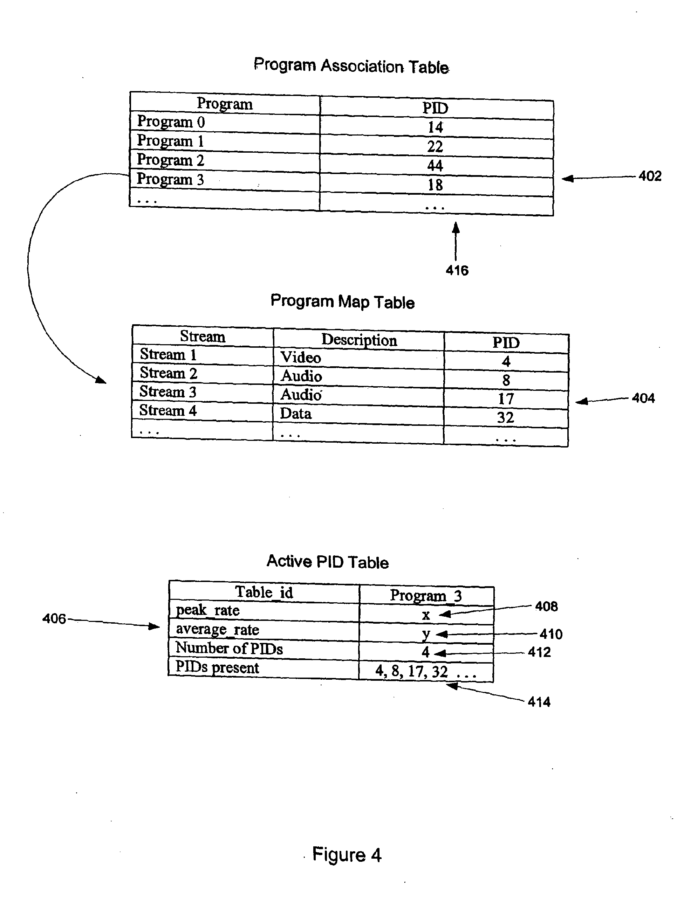

Set-top box 212 may include a playback module 216. Playback module 216 may be configured to compare the contents of the APT to the contents of one or more service information tables included in the partial transport stream. The service information tables include information describing the original transport stream before filtering. Set-top box 212 may use the APT to identify invalid sections of the service information tables. The use of service information tables and the APT are described in detail below with reference to Figure 4.

Set-top box 212 may also include an MPEG-2 decoder 218 that decodes or descrambles signals broadcasted in the compressed MPEG-2 format. In alternative embodiments, other compressed and non-compressed formats may be utilized. An appropriate decoder, if one is required, may be included in set-top box 212. An NTSC encoder 220 may also be included to generate a video signal that can be used by a television 224. Of course, the type of encoder included will correspond to the type of signal required at the input of television 224. A recording module 226 may also be included in set-top box 212 to record the partial transport stream, the service information tables and the APT.

The system shown in Figure 2 includes recording modules 210 and 226 located within tuning module 202 and set-top box 212. One skilled in the art will appreciate that the present invention may be implemented by placing a single recording module in either tuning module 202 or set-top box 212. Locating the recording module within set-top box 212 is advantageous because that configuration reduces the complexity of tuning module 202. Locating the recording module within tuning module 202 allows several different set-top boxes connected to home network 214 to retrieve the same program or service. In embodiments that include more than one set-top box connected to home network 214, tuning module 202 may be configured to filter an incoming transport stream and create two or more separate partial transport streams corresponding to programs or services requested by the different set-top boxes. A separate APT may be inserted into each of the partial transport streams.

One skilled in the art will appreciate the system shown in Figure 2 may be modified by combining tuning module 202 and set-top box 212 into a single device. Moreover, the components within tuning module 202 and set-top box 212 may be included within television 224. One or more of tuning module 202, set-top box 212 and television 224 may also include other conventional components used to convert a transport stream into a video signal for display on television 224. Such components may include: a bit stream buffer, a display buffer, and infrared interface, and RS-232 interface and a 1394 (Firewire) interface.

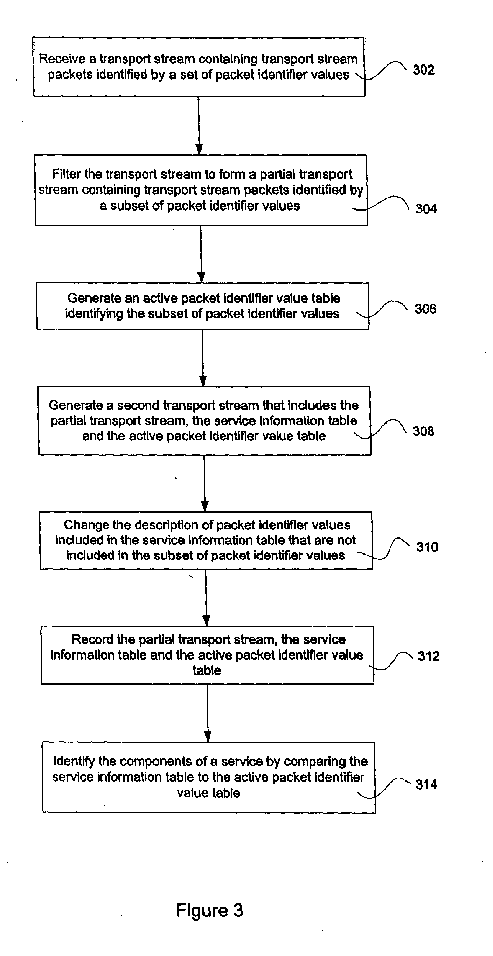

Figure 3 illustrates a method of operating a digital video system, set-top box or television in accordance with an embodiment of the invention. The method will be described with reference to a set-top box embodiment and with the understanding that minor modifications within the skill of a practitioner in the art may be made to implement alternative embodiments of the invention. First, in step 302 a set-top box receives a transport stream containing transport stream packets identified by PIDs. The transport stream may be received from a satellite dish, terrestrial network or other network that delivers digital video data.

Next, the transport stream is filtered to form a partial transport stream containing transport stream packets identified by a subset of PIDs in step 304. The partial transport stream formed in step 304 includes fewer PIDs than the original transport stream. For example, the transport stream may include 50 video programs carried by numerous transport stream packets having a total of 150 PIDs. The partial transport stream produced in step 304 may correspond to a single program and include transport stream packets identified by 5 or fewer PIDs.

Next, in step 306 an APT is generated. The APT identifies a subset of PIDs present in the partial transport stream. The set-top box generates a second transport stream and includes the partial transport stream, the service information table from the original transport stream and the APT in step 308. Figure 4 illustrates service information tables 402 and 404 and an APT 406. Table 402 is a conventional program association table that identifies PIDs of transport stream packets that carry program specific information. For example, transport stream packets identified by PID 18 carry information relating to program 3. Program 3 may be a video program selected by a user. Program map table 404 identifies the individual components of a program. In the implementation shown in Figure 4, the information contained in program map table 404 is transmitted to the set-top box with transport stream packets having a PID of 18. Program map table 404 shows that program 3 includes video, audio and data information. The video information is carried in transport stream packets having a PID of 4 and the audio information is carried in transport stream packets having PIDs of 8 and 17.

APT 406 includes information relating to the PIDs included within a partial transport stream. With reference to Figure 4, when a user selects program 3 for recording, the transport stream packets carrying data for programs 0, 1 and 2 can be filtered out of the transport stream. The resulting partial transport stream would include transport stream packets identified by PID values of 4, 8, 17 and 32 (for program 3) and the PID values for program association table 402 and program map table 404. A peak rate value 408 may be included to identify the maximum momentary transport packet rate. The peak rate may be identified by a 24-bit field coded as a positive integer in units of 400 bits per second. An average rate 410 may be included for identifying the average rate of the partial transport stream. The average rate may also be identified by a 24-bit field coded as a positive integer in units of 400 bits per second. Next, the number of PIDs included within the partial transport stream 412 is identified. The individual packet identifier values 414 may also be listed. Of course, APT 406 may include additional information for use by the set-top box or television.

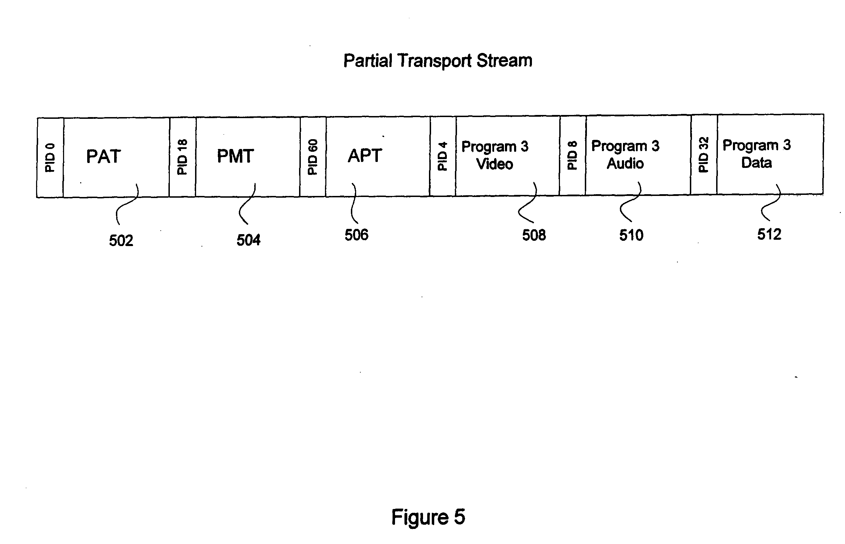

Figure 5 shows a portion of a partial transport stream formatted in accordance with an embodiment of the invention. Transport stream packets 502 identified by PID 0 carry a program association table. Transport stream packets 504 identified by PID 18 carry a program map table. Transport stream packets 506 identified by PID 60 carry an APT. Transport stream packets 508 identified by PID 4 carry video data for program 3. Transport stream packets 510 identified by PID 8 carry audio data for program 3. Finally, transport stream packets 512 identified by PID 32 carry other data for program 3.

Returning to Figure 3, in step 310 a description of packet identifier values included in the service information tables and that are not included in the subset of packet identifier values may be changed. For example, the PIDs listed in column 416 of program association table 402 may be changed to a value of 0 for programs that are not included in a partial transport stream. This optional step allows the set-top box or television to quickly determine which PIDs are included within the partial transport stream.

In step 312, the partial transport stream, the service information table and the active packet identifier value table may be recorded. Of course, the present invention is not limited to embodiments that require a recording step. Finally, in step 314, the set-top box may identify the components of a service or program by comparing the service information table(s) to the APT.

While the invention has been described with respect to specific examples including presently preferred modes of carrying out the invention, those skilled in the art will appreciate that there are numerous variations and permutations of the above described systems and techniques that fall within the spirit and scope of the invention as set forth in the appended claims.

## Claims

1. A method of processing a transport stream containing transport stream packets identified by a set of packet identifier values and a service information table identifying all of the packet identifier values in the transport stream, the method comprising:
(a) filtering the transport stream to form a partial transport stream containing transport stream packets identified by a subset of packet identifier values, the subset of packet identifier values containing fewer packet identifier values than the set of packet identifier values;
(b) generating an active packet identifier value table identifying the subset of packet identifier values; and
(c) generating a second transport stream that includes the partial transport stream, the service information table and the active packet identifier value table.

2. The method of claim 1, further including:
(d) recording the partial transport stream, the service information table and the active packet identifier value table.

3. The method of claim 1, further including:
(d) transmitting the partial transport stream, the service information table and the active packet identifier value table to a set-top box.

4. The method of claim 1, further including:
(d) transmitting the partial transport stream, the service information table and the active packet identifier value table to a television.

5. The method of claim 3, further including
(e) identifying the components of a program by comparing the service information table to the active packet identifier value table.

6. The method of claim 1, further including changing the description of packet identifier values included in the service information table that are not included in the subset of packet identifier values.

7. A set-top box coupled to a transport stream containing transport stream packets identified by a set of packet identifier values and a service information table identifying all of the packet identifier values in the transport stream, the set-top box comprising:
a demultiplexer that filters the transport stream to form a partial transport stream containing transport stream packets identified by a subset of packet identifier values, the subset of packet identifier values containing fewer packet identifier values than the set of packet identifier values;
an active packet identifier value table generation module that generates an active packet identifier value table that identifies the subset of packet identifier values; and
a recording module that records on a recording medium the partial transport stream, the service information table and the active packet identifier value table.

8. The set-top box of claim 7, further including a module that identifies the components of a program by comparing the service information table to the active packet identifier value table.

9. A television coupled to a transport stream containing transport stream packets identified by a set of packet identifier values and a service information table identifying all of the packet identifier values in the transport stream, the television comprising:
a demultiplexer that filters the transport stream to form a partial transport stream containing transport stream packets identified by a subset of packet identifier values, the subset of packet identifier values containing fewer packet identifier values than the set of packet identifier values;
an active packet identifier value table generation module that generates an active packet identifier value table that identifies the subset of packet identifier values; and
a recording module that records on a recording medium the partial transport stream, the service information table and the active packet identifier value table.

10. A digital video system comprising:
a tuner coupled to a transport stream containing transport stream packets identified by a set of packet identifier values and a service information table identifying all of the packet identifier values in the transport stream, the tuner comprising:
a demultiplexer that filters the transport stream to form a partial transport stream containing transport stream packets identified by a subset of packet identifier values, the subset of packet identifier values containing fewer packet identifier values than the set of packet identifier values;
an active packet identifier value table generation module that generates an active packet identifier value table that identifies the subset of packet identifier values;
a set-top box that includes a playback module that identifies the components of a program by comparing the service information table to the active packet identifier value table; and
a network coupling the tuner to the set-top box.

11. The digital video system of claim 10, wherein the tuner further includes a recording module that records on a recording medium the partial transport stream, the service information table and the active packet identifier value table.

12. The digital video system of claim 10, wherein the set-top box further includes a recording module that records on a recording medium the partial transport stream, the service information table and the active packet identifier value table.

13. The digital video system of claim 10, wherein a bandwidth of the network is narrower than a bandwidth of another network that carries the transport stream to the tuner.

14. The digital video system of claim 10, wherein while filtering the transport stream, the tuner forms a second partial transport stream containing transport stream packets identified by a second subset of packet identifier values.

15. The digital video system of claim 14, wherein the active packet identifier value table generation module generates a second active packet identifier value table that identifies the second subset of packet identifier values.

16. A computer-readable medium containing computer-executable instructions for causing a digital video device coupled to a transport stream containing transport stream packets identified by a set of packet identifier values and a service information table identifying all of the packet identifier values in the transport stream to perform the steps comprising:
(a) filtering the transport stream to form a partial transport stream containing transport stream packets identified by a subset of packet identifier values, the subset of packet identifier values containing fewer packet identifier values than the set of packet identifier values;
(b) generating an active packet identifier value table identifying the subset of packet identifier values; and
(c) generating a second transport stream that includes the partial transport stream, the service information table and the active packet identifier value table.

17. The computer-readable medium of claim 16, further including computer-executable instructions for causing the digital video device to perform the step of:
(d) recording the partial transport stream, the service information table and the active packet identifier value table.

18. The computer-readable medium of claim 16, further including computer-executable instructions for causing the digital video device to perform the step of:
(d) transmitting the partial transport stream, the service information table and the active packet identifier value table to a set-top box.
